# EUROPEAN PATENT SPECIFICATION

(11) **EP 4 314 169 B1**
(45) Date of publication and mention of the grant of the patent: **09.10.2024**
(21) Application number: 22734419.9
(22) Date of filing: 27.05.2022
(51) Int. Cl.: C09C 1/62, C09C 1/64

(54) **METALLIC PIGMENT PREPARATION**
METALLPIGMENTPRÄPARATION
PRÉPARATION DE PIGMENT MÉTALLIQUE

(30) Priority: 27.05.2021 US 202163193634 P
(43) Date of publication of application: 07.02.2024
(73) Proprietor: Sun Chemical Corporation, Parsippany, NJ 07054 (US)
(72) Inventor: PHILLIPS, Blayne, Cincinnati, OH 45232 (US)
(74) Representative: Carpmaels & Ransford LLP
(86) International application number: PCT/US2022/031246
(87) International publication number: WO 2022/251570

(56) References cited:
- EP-A1- 2 452 985
- US-A- 3 931 029
- US-A- 4 484 951
- US-A1- 2011 094 412

## Description

### Background

Metal powders and pigments, for example, aluminum, exothermically react in the presence of water to release hydrogen gas. The formation of gas is detrimental as it can cause defects in coatings and other articles containing metallic pigments. Further, the handling of metallic pigments and powders can be dangerous due to the risk of forming explosive dust clouds. The present development solves these problems by passivating the aluminum to aqueous attack and by providing it in a form that prevents dust formation.

Metallic effect pigments are platelet-shaped materials used to produce a metallic appearance with a characteristic light-to-dark "flip-flop" effect when viewed from different angles. It is desirable to provide this effect on packaged goods, automobiles, and plastic articles. Applications that have a high-pH or are strongly oxidative are usually not suitable metallic pigments, due to their inherent reactivity.

The most common metal used for metallic effect pigments is aluminum, which has a bright silver color. Aluminum pigments are typically produced via ball milling metallic grit in the presence of a lubricant to a flat, platelet shape.

Due to the reactivity of aluminum, formulation into water-based application may cause corrosion, leading to hydrogen gas generation and discoloration. Various strategies are used to improve the stability of metallic pigments in waterborne environments, including chemical passivation of the pigment surface by silicates, phosphates, phosphites, molybdates, chromates, or vanadates. While these strategies are effective, the pigments remain unstable in applications with extreme acidic or basic pH, such as latexes. In addition, aluminum pigments are typically provided as a paste with solvents that are immiscible or incompatible with latex. Removing the solvent to produce a dried pigment powder is one solution, however dried metallic pigments may produce a significant amount of potentially explosive dust.

The current development solves these issues by providing a non-dusting aluminum pigment preparation for use in a wide range of applications. The non-dusting aluminum pigment preparation is formulated to allow for rapid incorporation into aqueous systems with a high pH such as latex paint systems or latex dispersions for rubber articles. The pigments of the current development can additionally be used in any type of solvent, allowing for a colorant that works in solvent and water-based coatings formulations over a wide range of applications and loadings.

The metallic pigment preparation may be used in high pH systems or dispersions allowing for the production of latex coatings and rubber articles with a metallic appearance. The metallic pigment preparation improves the safety and durability when formulating with high pH systems. The safety is improved by reducing the likelihood of gas generation. Safety is also improved by providing a pellet that is more resistant to crumbling and forming dust. Durability of the pigment in the preparation is improved thereby increasing the life span of aluminum-latex dispersions used for the manufacture of rubber articles. The metallic pigment preparation also resists aggregation improving shelf life and appearance.

EP 2452985 A1 discloses a metallic pigment having a structure in which an organic carboxylic acid metal salt is adhered onto metal particles.

US 2011/094412 A1 discloses a metallic effect pigment with an additive that is applied on at least a portion of the metallic effect pigment. The additive comprises at least one carboxylic acid having at least 4 carbon atoms and also at least one polyglycol ether. The carboxylic acid and polyglycol ether are bonded covalently to one another.

US 4,484,951 discloses an aluminum flake pigment composition for paint containing 100 parts by weight of aluminum flake particles, 1 to 7 parts by weight of dimer acid, 0.5 to 14 parts by weight of aliphatic amine and other additives.

### Brief Summary

This invention relates to a waterborne ink, latex composition or rubber composition comprising a metallic pigment preparation comprising a metallic pigment, and a passivating agent, wherein the passivating agent is a dimer and/or trimers fatty acid with >1 carboxylic acid groups. The invention also relates to a metallic pigment preparation comprising a metallic pigment, and a passivating agent, wherein the passivating agent is a dimer or trimer fatty acid with >1 carboxylic acid groups selected from 5 (or 6)-carboxy-4-hexylcyclohex-2-ene-1-octanoic acid, 4-Cyclohexene-1,2-dicarboxylic acid, phthalic acid, terephthalic acid, isophthalic acid, 1,4-phenylenediacrylic acid, benzene-1,3,5-triacetic acid, 3-(4-carboxyphenyl)propionic acid, 1,4-phenylenedipropionic acid, 1,3-phenylenediacetic acid and p-phenylenediacetic acid. The term `fatty acid(s)' is defined by the metes and bounds of this application.

The passivating agent may be in the range of 5%-23% with respect to the total weight of the metallic pigment preparation. The passivating agents used in the current development may be described as dimer or trimer fatty acids. Fatty acid dimers and trimers may be produced by reacting 2 or more unsaturated fatty acids to form a structure comprised of a reaction product of the starting fatty acids. Suitable unsaturated fatty acids that may be used to make the fatty acid dimer include C3-C20 unsaturated fatty acids. The fatty acids may be the same, or they may be different. Examples of fatty acids used to make the fatty acid dimer or trimer include, but are not limited to, acrylic acid, methacrylic acid, oleic acid, elaidic acid, gonoidic acid, erucic acid, palmitoleic acid, vaccenic acid, linoleic acid linolelaidic acid, γ-linolenic acid, α-linolenic acid, stearidonic acid, and mixtures thereof.

In general, the passivating agent is selected from structures 1-4 and combinations thereof.

The passivating agents may be represented by dimer or trimer fatty acids with >1 carboxylic acid groups having a basic structure of (1): 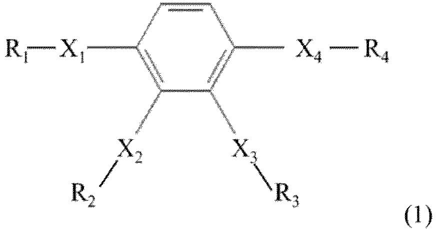 where X₁, X₂, X₃, and X₄ are independently an aliphatic chain of 0-20 sp³ or sp² hybridized carbon atoms, and R₁, R₂, R₃, and R₄ are independently an end group selected from H, COOH, COO⁻, OH, CH₃, tertiary butyl, isopropyl groups. In this scenario, the passivating agent may be selected from the group consisting of phthalic acid, terepthalic acid, isopthalic acid, 1,4-phenylenediacrylic acid, benzene-1,3,5-triacetic acid, 3-(4-carboxyphenyl)propionic acid, 1,4-phenylenedipropionic acid, 1,3-phenylenediacetic acid, p-phenylenediacetic acid, and aromatic isomers of C36 dimers.

The passivating agents may also be represented by dimer or trimer fatty acids with >1 carboxylic acid groups have a basic structure (2): 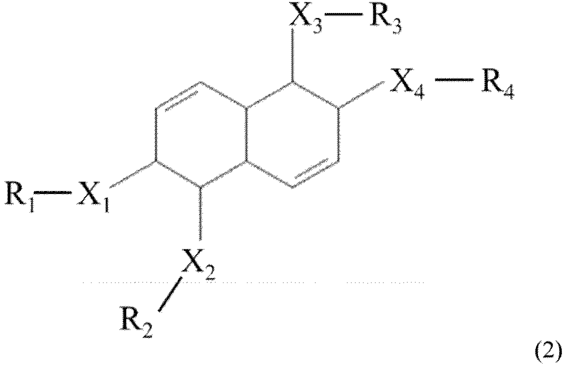 where X₁, X₂, X₃, and X₄ are independently an aliphatic chain of 0-20 sp³ or sp² hybridized carbon atoms, and R₁, R₂, R₃, and R₄ are independently an end group selected from H, COOH, COO-, OH, CH₃, tertiary butyl, isopropyl groups.

The passivating agents may also be represented by dimer or trimer fatty acids with >1 carboxylic acid groups have a basic structure (3): 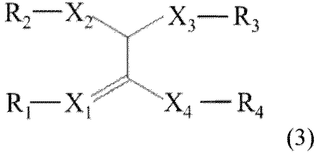 where X₁, X₂, X₃, and X₄ are independently an aliphatic chain of 0-20 sp³ or sp² hybridized carbon atoms, and R₁, R₂, R₃, and R₄ may independently be an end group from one of the following: H, COOH, COO-, OH, CH₃, tertiary butyl, isopropyl groups. In one embodiment, at least two of the R groups are COOH or COO- groups. In this scenario, the passivating agents represented by dimer or trimer fatty acids with >1 carboxylic acid groups of the basic structure (3) include non-cyclic isomers of C36 dimers.

The passivating agents may also be dimer or trimer fatty acids with >1 carboxylic acid groups and have a basic structure (4): 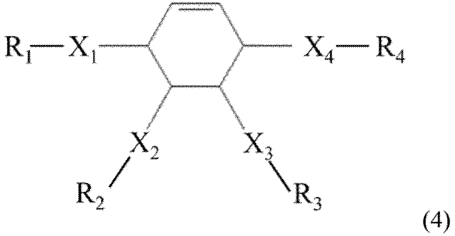 where X₁, X₂, X₃, and X₄ are independently an aliphatic chain of 0-20 sp³ or sp² hybridized carbon atoms, and R₁, R₂, R₃, and R₄ may independently be an end group from one of the following: H, COOH, COO-, OH, CH₃, tertiary butyl, isopropyl groups. The passivating agents represented by structure 4 may be cis-4-Cyclohexene-1,2-dicarboxylic acid, 5 (or 6)-carboxy-4-hexylcyclohex-2-ene-1octanoic acid, and cyclic isomers of C36 dimers.

The metallic pigment contained in the metallic pigment preparation may be present from 60-95% with respect to the total weight of the preparation, and from 77-95% with respect to the total weight of the preparation, and from 85-99% of a metal and with 1-15% of a milling aid, with respect to the total weight of the preparation.

The metallic pigment preparation may be coated with one or more metal oxides selected from silicon oxide, titanium dioxide, zinc oxide, zirconium dioxide, tin oxide, cerium dioxide, vanadium (IV) oxide, manganese oxide, lead oxide, chromium oxide, iron oxide, aluminum oxide, tungsten oxide, and mixtures and alloys.

The metallic pigment preparation may further comprise additives selected from neutralizing agents, pH adjusters, dispersing additives, anti-foam additives, de-foaming additives, and adhesion promoters, wherein pH adjusters are amines.

The metallic pigment preparation may be used in paints, inks, coatings or latex as well as plastic or rubber compositions.

### Detailed Description

This development relates to a metallic pigment preparation according to the appended claims that is comprised of a metallic pigment, a passivating agent, and optionally a neutralizing agent. The preparation can be provided in a non-dusting form, for instance, in the shape of the pellet. The preparation may be stirred into aqueous or non-aqueous, solvent-based liquid formulations. The preparation may also be used in natural rubber or synthetic latex.

The metal effect pigment preparations comprise a novel passivation technology. Typical passivation strategies fall into two categories: (1) use of a physical barrier that blocks the aluminum surface from environment, such as SiO₂; or (2) use of a chemical passivation strategy such as a molybdate, chromate, vanadate, or phosphate ester. In contrast, this current development uses a dimer or trimer fatty acid to obtain passivation of aluminum pigments. The term `fatty acid(s)' is defined by the metes and bounds of this application. This development represents a new category of pigment passivation agents. While the anticorrosion potential of dimer acids has been observed for large metal parts, the use of dimer acids as anticorrosion agents has not been reported to be used for metallic pigments except as promoters for organic pigment adhesion, or, unless used in combination with long chain, aliphatic amines.

Additionally, the effect pigment preparations may be provided in a pelletized form, and do not need to be supplied as a paste. Moreover, the preparation has a simpler formulation than other formulations currently described. Finally, passivation strategy enables the use of aluminum pigments in applications comprising latex.

The metallic pigment preparation is comprised of metallic pigment, a passivating agent as defined in the appended claims and optionally an additive(s). The metallic pigment preparations may be provided in a solid form that does not produce large quantities of dust. The metallic pigment could be provided in a solid form, such as a pellet or prill, in order to minimize dust and eliminate solvents.

In one embodiment the metallic pigment preparation contains a metallic pigment, a passivating agent, and an optional additive. In the case where the metallic pigment is used in metallic pigment preparation, it may be present at a range of 60-95% with respect to the total weight of the preparation.

In another embodiment the metallic pigment preparation contains a metallic pigment, a passivating agent, and an optional additive. In the case where the metallic pigment is used in metallic pigment preparation, then it may be present at a range of 77-95% with respect to the total weight of the preparation.

In one embodiment, the metallic pigment is comprised of a metal and a milling aid. In one embodiment, the metallic pigment may contain between 85-99% of a metal and 1-15% of a milling aid. The metal comprising the metallic pigment in the metal pigment preparation may be one or more from the following list of aluminum, bismuth, copper, copper-zinc alloys, copper-tin alloys, stainless steel, carbon steel, iron, silver, zinc, nickel, titanium, chromium, manganese, vanadium, magnesium, zinc-magnesium alloys, and alloys and mixtures thereof.

In one embodiment, the milling aid comprising the metallic pigment may be a saturated or unsaturated fatty acid with between 8-22 carbon atoms. By saturated it is meant that there are no double bonds between the C atoms, by unsaturated, it is meant that there is at least one double bond between two adjacent carbon atoms.

In the case where a fatty acid is used, the fatty acid may include but is not limited to oleic acid, stearic acid, caprylic acid, capric acid, lauric acid, myristic acid, palmitic acid, arachidic acid, behenic acid, lignoceric acid, cerotic acid, myristoleic acid, palmitoleic acid, spienic acid, oleic acid, elaidic acid, vaccenic acid, linoleic acid, lineolaidic acid, and mixtures thereof.

The metallic pigment used in the metallic pigment preparation may be platelet and/or flake shaped. By platelet or flake shaped, it is meant that one dimension of the metallic pigment particle is significantly smaller than the other dimensions. In the case where the metallic pigment is a flake shaped, then the pigment may have a major axis or diameter in the range of 1 µm to 500 µm, 2 µm to 100 µm and 5 µm to 75 µm. The metallic pigment may have a minor axis or thickness in the range of 5 nm to 5 µm, 5 nm to 3 µm and 10 nm to 2 µm.

The shape of the metallic pigment flake may be described as cornflake, silver dollar, vacuum metalized flake (VMP), or other term used to those skilled in the art.

In one embodiment, the metallic pigment used in the metallic pigment preparation of the development may be optionally coated with one or more metal oxides without limiting the scope. If a metal oxide is used to coat the metallic pigment, then the metal oxide may include, but is not limited to silicon oxide, titanium dioxide, zinc oxide, zirconium dioxide, tin oxide, cerium dioxide, vanadium (IV) oxide, manganese oxide, lead oxide, chromium oxide, iron oxide, aluminum oxide, tungsten oxide, and mixtures and alloys thereof. Other oxides may also be used without limiting the scope of the development. The coating may also comprise a hydrated oxide of any one of the aforementioned oxides. The coating may also be a doped oxide of any one of the aforementioned. The thickness of the metal oxide layers may be variable but may also allow for partial transparency. In general, the thickness of the metal oxide layers is in the range of about 10 nm to 350 nm.

The metallic pigment preparation contains passivating agent. The passivating agent may be added in the range of 5%-23% with respect to the total weight of the metallic pigment preparation. The passivating agents used in the current development may be described as dimer or trimer fatty acids. Fatty acid dimers and trimers may be produced by reacting 2 or more unsaturated fatty acids to form a structure comprised of a reaction product of the starting fatty acids. Suitable unsaturated fatty acids that may be used to make the fatty acid dimer include C3-C20 unsaturated fatty acids. The fatty acids may be the same, or they may be different. Examples of fatty acids used to make the fatty acid dimer or trimer include, but are not limited to, acrylic acid, methacrylic acid, oleic acid, elaidic acid, gonoidic acid, erucic acid, palmitoleic acid, vaccenic acid, linoleic acid linolelaidic acid, γ-linolenic acid, α-linolenic acid, stearidonic acid, and mixtures thereof.

Dimer and trimer fatty acids typically may be prepared by condensing unsaturated monofunctional carboxylic acids such as oleic, linoleic, soya or tall oil acid through their olefinically unsaturated groups, in the presence of catalysts such as acidic clays. The distribution of the various structures in dimer acids (nominally C₃₆ dibasic acids) depends upon the unsaturated acid used in their manufacture. Typically, oleic acid provides a dimer acid containing about 38% acyclics, about 56% mono- and bicyclics, and about 6% aromatics. Soya acid provides a dimer acid containing about 24% acyclics, about 58% mono- and bicyclics and about 18% aromatics. Tall oil acid gives a dimer acid containing about 13% acyclics, about 75% mono- and bicyclics and about 12% aromatics.

Dimer and trimer fatty acids are commercially available from a variety of vendors, including Ingevity (as EnvaDym^{®} 175, 295, 595, Diacid 1550) and Croda International Plc (as Pripol^{™} 1004 and 1009). For further information concerning these acids, see (1) Leonard, Edward C., "The Dimer Acids," Humko Sheffield Chemical, Memphis, Tenn., 1975, pp. 1, 4 and 5, and (2) the Kirk-Othmer Encyclopedia of Chemical Technology, John Wiley & Sons, 3rd ed., Vol. 7, 1979, pp. 768-770. Different grades exist for the dimer and trimer acids. Some have been hydrogenated to remove olefinic double bonds and/or distilled for purification.

The dimer and trimer fatty acids obtained in this way may be described as acyclic, cyclic, aromatic or polycyclic. These dimer and trimer fatty acids are commercially available as mixture of isomers and monomers. Trimer fatty acids have similar structures to dimer fatty acids except that they contain an additional carboxyl group, an additional hydrocarbon tail group, and a greater degree of polycyclic isomerism. Purified dimer and trimer fatty acids are also commercially available.

In one embodiment, the passivating agents are dimer or trimer fatty acids with >1 carboxylic acid groups and are given by the basic structure (1): 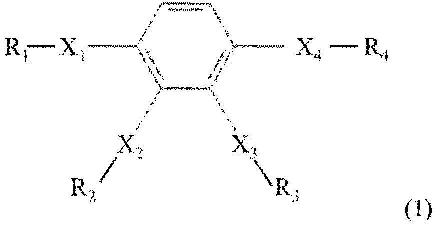 Where X₁, X₂, X₃, and X₄ are independently an aliphatic chain of 0-20 sp³ or sp² hybridized carbon atoms, and R₁, R₂, R₃, and R₄ may independently be an end group from one of the following: H, COOH, COO⁻, OH, CH₃, tertiary butyl, isopropyl. In one embodiment, at least two of the R groups are COOH or COO⁻ groups. Examples of the type of passivating agents represented by Equation 1 include but are not limited to phthalic acid, terepthalic acid, isopthalic acid, 1,4-phenylenediacrylic acid, benzene-1,3,5-triacetic acid, 3-(4-carboxyphenyl)propionic acid, 1,4-phenylenedipropionic acid, 1,3-phenylenediacetic acid, p-phenylenediacetic acid, and aromatic isomers of C36 dimers.

In further embodiments, the passivating agents are dimer or trimer fatty acids with >1 carboxylic acid groups and are given by the basic structure (2): 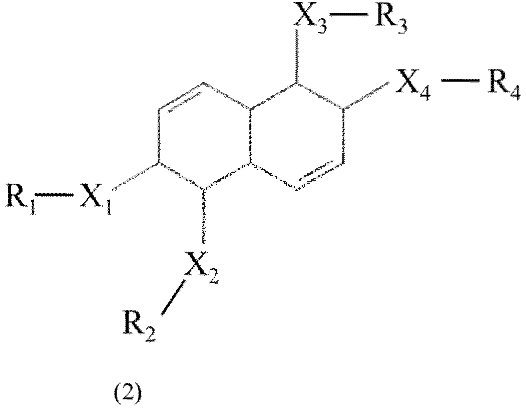 Where X₁, X₂, X₃, and X₄ are independently an aliphatic chain of 0-20 sp³ or sp² hybridized carbon atoms, and R₁, R₂, R₃, and R₄ may independently be an end group from one of the following: H, COOH, COO-, OH, CH₃, tertiary butyl, isopropyl. In one embodiment, at least two of the R groups are COOH or COO-groups. Examples of the type of passivating agents represented by Equation 2 include but are not limited to bicyclic isomers of C36 dimers.

In further embodiments, the passivating agents are dimer or trimer fatty acids with >1 carboxylic acid groups and are given by the basic structure (3): 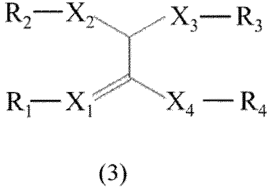 Where X₁, X₂, X₃, and X₄ are independently an aliphatic chain of 0-20 sp³ or sp² hybridized carbon atoms, and R₁, R₂, R₃, and R₄ may independently be an end group from one of the following: H, COOH, COO-, OH, CH₃, tertiary butyl, isopropyl. In one embodiment, at least two of the R groups are COOH or COO-groups. Examples of the type of passivating agents represented by Equation 3 include but are not limited to non-cyclic isomers of C36 dimers.

In further embodiments, the passivating agents are dimer or trimer fatty acids with >1 carboxylic acid groups and are given by the basic structure (4): 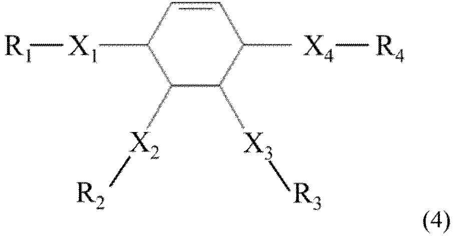 Where X₁, X₂, X₃, and X₄ are independently an aliphatic chain of 0-20 sp³ or sp² hybridized carbon atoms, and R₁, R₂, R₃, and R₄ may independently be an end group from one of the following: H, COOH, COO-, OH, CH₃, tertiary butyl, isopropyl. In one embodiment, at least two of the R groups are COOH or COO-groups. Examples of the type of passivating agents represented by Equation 4 include but are not limited to cis-4-Cyclohexene-1,2-dicarboxylic acid, 5 (or 6)-carboxy-4-hexylcyclohex-2-ene-1octanoic acid, and cyclic isomers of C36 dimers.

The passivating agent may be a combination of any of the compounds given structures 1-4.

In a further embodiment, the effect pigment preparation may optionally contain additional additives. These additives include but are not limited to pH adjusters, dispersing additives, anti-foam additives, de-foaming additives, and adhesion promoters. pH adjusters such as ammonia, amines, metal carbonate salts, and metal hydroxide salts. The type and class of dispersing additive is not important, and any dispersing additive compatible with the system for the application and known to those skilled in the art may be used. The dispersing additive may be a surfactant or a polymeric dispersant. The dispersing additives may be any commercially available dispersant known to those skilled in the art.

The metallic pigment preparation of the development may be provided at solids >95%. The metallic pigment preparation of the development may be provided in a dry, non-dusting form. The metallic pigment preparation may be provided in number of shapes including but not limited to pellets, bricks, granules, pills, briquets, and/or tablets.

The metallic pigment preparation can be incorporated, for example, into a number of different applications including waterborne and solvent borne latex, printing inks, and coatings.

In some embodiments, the metallic pigment preparation of the development may be used in latex dispersions to provide a metallic effect to articles made of latex rubber. The latex may be natural or synthetic or a combination thereof. Natural latex dispersion is a dispersion of poly-cis-isoprene obtained from cultivation of Hevea brasillensis (rubber tree) and may have various additives to modify its behavior. Synthetic latex dispersions are derived from petroleum-based monomers, these include but are not limited to nitrile rubber, polyisoprene, chloroprene, butyl rubber, with additional additives to modify the behavior. In both synthetic and natural rubber dispersions, the additional additives may include, but are not limited to, one or more pH adjusters, vulcanizing agents, vulcanizing accelerants, chelators, dispersants, rheology modifiers, organic pigments, fillers, and mixtures thereof. Typical articles made of latex rubber include, but are not limited to, gloves, balloons, clothing, footwear, mattresses, swim caps, prophylactics, paints, and other items known to those skilled in the art.

When added to a latex dispersion, the content of the metallic pigment preparation of the development in the latex dispersion may be in the range of 0.1% to 30% by weight with respect to the weight of the latex dispersion. According to the present development, dispersants, pH adjusters, water, organic solvents, corrosion inhibitors, rheology modifiers, thickeners, antifoams, biocides, preservatives and defoamers as well as other additives known in the art may be included in the latex composition. The content of the metallic pigment of the development in the latex dispersion may be in the range of 1% to 20% with respect to the weight of the latex dispersion. Rubber articles may be obtained by any number of dipping, casting or molding methods known to those familiar with the art. The content of metallic pigment in a rubber article prepared in this manner may be in the range of 0.2 - 20%. Rubber articles produced in this way have a metallic appearance with the characteristic light-to-dark flip flop appearance.

The latex may contain additional coloring agents including, another colored pigment, effect pigment, extender or dye. Illustrative examples of the color pigment include phthalocyanine, iron oxide, quinacridone, perylene, isoindoline, azo lake, chrome yellow, carbon black, and titanium dioxide. Illustrative examples of the effect pigment include flake-form pigments of pearlescent mica, aluminum, brass, copper, silica, aluminum oxide and the like.

The metallic pigment preparation behaves like a universal pigment and can be readily stirred into all types of liquid coating applications including, automotive coatings, interior architectural coatings, exterior architectural coatings, gravure inks, flexographic inks, paste inks, energy curing (UV or EB) inks, etc. Additionally, the metallic pigment preparation may be used in combination with other effect pigments or organic pigments in all ratios without limiting the scope of the development.

The content of the metallic pigment in the coating or ink composition may be set in the range of 0.1% to 50% by weight with respect to the other components of the coating system. The content of the effect pigment preparation may be set in the range of 1% to 40% by weight with respect to the other components of the coating system.

A coating or ink composition containing the metallic pigment preparation of the present invention can be obtained by blending the metallic pigment preparation of the current technology with a coating resin. Polyester, polyurethane, polyvinyl, cellulose, polyamide, nitrocellulose, acrylic, alkyd, fluorinated resins or the like can be used as the coating resin.

In a coating composition containing the metallic pigment preparation according to the present invention, another organic pigment, effect pigment, extender or dye can be employed in addition to the effect pigment preparation of the present technology. If an organic pigment is used then the types of organic pigments that can be used in the current development are all types of azo pigments, polycylic pigments, anthraquinone pigments including monoazo pigments, disazo pigments, disazo condensation pigments, naphthol pigments, benzimidazolone pigments, isoindolinone pigments, isoindoline pigments, metal complex pigments, quinacridone pigments, perylene pigments, carbon black pigments, phthalocyanine pigments, perinone pigments, diketopyrrolo-pyrrole pigments, thioindigo pigments, anthropyrimidine pigments, flavanthrone pigments, anthanthrone pigments, dioxazine pigments, triarylcarbonium pigments, quinophthalone pigments, or any combination thereof. Illustrative examples of the effect pigment include flake-form pigments of TiO₂-coated mica, TiO₂-coated synthetic mica, TiO₂-coated glass flake, TiO₂-coated platy alumina, iron oxide-coated mica, iron oxide-coated synthetic mica, iron oxide-coated glass flake, iron oxide-coated alumina, aluminum, silica-coated aluminum, brass, copper, natural mica, synthetic mica, borosilicate glass flake, silica, aluminum oxide and the like. The list of illustrative effect pigments additionally includes pearlescent pigments that are coated with one or more layers of metal oxides, including tin oxide, titanium dioxide, iron (II) oxide, iron (III) oxide, iron hydroxide, magnetite, maghemite, chromium oxide, cerium
oxide, zirconium oxide and others without limiting the scope of the development.

According to the present development, a crosslinker, water, an organic solvent, an interfacial active agent, a hardener, an ultraviolet absorber, a thickener, a corrosion inhibitor as well as other additives known in the art can be included in the coating composition containing the metallic pigment preparation of the invention.

The metallic pigment preparation according to the appended claims may be used in any ink including solvent borne, waterborne and energy curable packaging inks. If the pigments of the current development are used in a packaging ink, then they may be used to color both the interior and the exterior of a package or other container. The metallic pigment preparation-containing ink may be flexographic, screen, paste, sheetfed, energy cured, gravure or inkjet.

The metallic pigment preparation according to the appended claims may be used in any type of paint, including refinish and OEM automotive paints, interior and exterior architectural paints, latex paint, and industrial paints.

The present development has been described in detail, including the preferred embodiments thereof.

### Examples

The development is further described by the following non-limiting examples which further illustrate the development, and are not intended, nor should they be interpreted to, limit the scope of the development.

### Inventive Examples 1 & 2:

150 g of a metallic pigment paste is blended for 30 minutes in a planetary mixer with a treatment mixture. The treatment mixture includes passivating agent, 10 g of water and additional additives. The resulting paste is pelletized and dried at 60-80°C for 8-12 hours. The obtained pellets are dry and non-dusting. A description of the pigments used in Examples 1-2 is given in Table 1. A description of the treatment mixture used in Examples 1-2 is given in Table 2.

**Table 1: Description of metallic pigments used in the Examples**

| Pigment name | Manufacturer | Description |
|---|---|---|
| BL2051 | Sun Chemical | Cornflake type aluminum paste |
| Aluminum Flake d50: 11-20 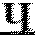 m | Sun Chemical | Silver dollar flake type aluminum paste |

**Table 2: Amount and type of passivating agent and additional additives used to produce metallic pigment preparation**

| Ex. # | Metallic Pigment | Passivating agent | CODE | Treatment (passivating agent) (g) | pH Additive | pH Adjuster (g) | Dispersant | Dispersant |
|---|---|---|---|---|---|---|---|---|
| Ex. 1 | BL2051 | 5(or 6)-carboxy-4-hexylcyclohex-2-ene-1-octanoic acid | 4263-8-1 | 10.5 | 2-amino-2-methyl-propan-1-ol | 4.3 | Tween 40 | 5.25 |
| Ex. 2 | BL64068 | 5(or 6)-carboxy-4-hexylcyclohex-2-ene-1-octanoic acid | 4263-43 | 10 | 2-amino-2-methyl-propan-1-ol | 2.7 | - | - |

Comparative Example 5 - Untreated Aluminum pigment commercially available as BL 6282 IP (Sun Chemical).

Comparative Example 6 - Treated aluminum pigment preparation BL Compal 4242 WS (Sun Chemical).

### Example: Stability Test

Approximately 20 g of the example effect pigment preparation under test was combined with 50 mL butyl glycol and 50 mL deionized water in a 300 mL Erlenmeyer flask and mixed for 5 minutes. This apparatus was placed in a water bath at 40°C and sealed. After a 30-minute incubation, the flask is connected to a sealed gas burette that was filled with deionized water, the hydrogen gas evolving from the sample was allowed to enter the burette and displace the water. The test continued for 30 days and the amount of gas generated over this period was recorded. Table 3 shows the number of days until failure (>100 mL gas evolved) and the volume of gas evolved.

**Table 3: Stability test results for metallic pigments and metallic pigment preparations in water and butyl glycol mixture.**

| Example | Gas Test (days to failure) (30 max) | Volume at end point (mL) |
|---|---|---|
| Ex. 1 | 30 | 31 |
| Ex. 2 | 30 | 43 |
| Comp. Ex 5 | 1 | >100 |
| Comp. Ex 6 | 30 | 34.5 |

The metallic pigment preparations show good stability in an aqueous system and are suitable for waterborne formulation.

### Example: Latex Longevity Test

5 g of metallic preparation is added to 150 g of natural rubber latex (Killian Latex, Akron, OH) and allowed to stir in a manner that does not generate turbulence. The number of days the latex dispersion remains fluid by visual assessment is determined for a maximum of 21 days. Viscous gelling and solidification as noted visually are considered failures. The results are summarized in Table 4.

**Table 4: Results of latex longevity test.**

| Sample | Days until failure |
|---|---|
| Example 2 | 21 |
| Comp. Ex. 6 | 14 |
| Comp. Ex 5 | 0 |

The data in Table 4 shows the improved stability (longevity) of the inventive pigment preparations.

### Use Examples:

### Example 7 (Aluminum pigmented Latex Articles)

20 g of the preparation prepared in Example 1 is mixed with 40 g of deionized water. 15 g of this mixture is added to 150 g of compounded natural rubber latex (Killian Latex, Akron, OH). The pH is then adjusted to 8-12. The mixture is stirred in a non-turbulent way to maintain homogeneity of the mixture. Rubber articles are prepared via dipping onto forms and film casting. These articles produce the characteristic dark to light flip flop effect and are free of pinholing defects that are characteristic of aluminum reactions in latex. This shows that Example 1 preparation is suitable for manufacturing articles via dip coating or casting at a manufacturing scale to produce defect free rubber goods with a metallic flip-flop effect.

### Example 8 (Metallic pigment preparation in waterborne ink)

10 g of the metallic pigment preparation prepared in Example 1-2 is mixed with 10 g of deionized water. This mixture is added to 40 g of a waterborne ink resin Joncryl 1655 and mixed in a DAC High Speed Mixer for 2 min @ 2,000 RPM. The prepared ink shows the characteristic flip-flop effect of metallic inks is seen when printed or drawn as a film. The ink is agglomerate free. This shows that waterborne inks made with the inventive pigment preparation is suitable for use at press for printing packaging and labels with a characteristic metallic flip-flop effect.

### Example 9 (Aluminum pigmented latex paint)

1 g of Example 2 and 1 g of deionized water is added to 9 g of a water based latex paint system and mixed in a DAC High Speed Mixer for 2 min @ 2,000 RPM. The prepared paint showed the characteristic flip-flop effect of metallic paints. The paint was agglomerate free. This shows that a latex paint made with the inventive pigment preparation is suitable for providing surfaces with a metallic flip-flop effect.

## Claims

1. A waterborne ink, latex composition or rubber composition comprising a metallic pigment preparation comprising a metallic pigment, and a passivating agent, wherein the passivating agent is a dimer or trimer fatty acid with >1 carboxylic acid groups.

2. The waterborne ink, latex composition or rubber composition of claim 1, wherein the passivating agent is in the range of 5%-23% with respect to the total weight of the metallic pigment preparation.

3. The waterborne ink, latex composition or rubber composition of claim 1, wherein the dimer or trimer fatty acid is produced by reacting 2 or more unsaturated fatty acids to form a structure comprised of a reaction product of the starting fatty acids, wherein the unsaturated fatty acids are C3-C20 unsaturated fatty acids, preferably wherein the unsaturated fatty acids are selected from the group consisting of acrylic acid, methacrylic acid, oleic acid, elaidic acid, gonoidic acid, erucic acid, palmitoleic acid, vaccenic acid, linoleic acid, linolelaidic acid, γ-linolenic acid, α-linolenic acid, stearidonic acid, and mixtures thereof.

4. The waterborne ink, latex composition or rubber composition of claim 1, wherein the passivating agents represented by dimer or trimer fatty acids with >1 carboxylic acid groups have a basic structure of (1): 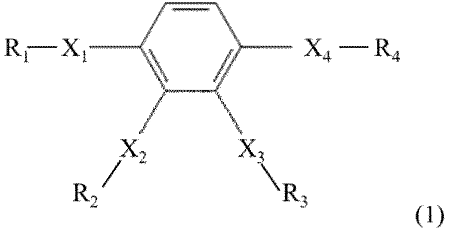 where X₁, X₂, X₃, and X₄ are independently an aliphatic chain of 0-20 sp³ or sp² hybridized carbon atoms, and R₁, R₂, R₃, and R₄ are independently an end group selected from H, COOH, COO⁻, OH, CH₃, tertiary butyl, isopropyl groups.

5. The waterborne ink, latex composition or rubber composition of claim 4, wherein the passivating agent is selected from the group consisting of phthalic acid, terephthalic acid, isophthalic acid, 1,4-phenylenediacrylic acid, benzene-1,3,5-triacetic acid, 3-(4-carboxyphenyl)propionic acid, 1,4-phenylenedipropionic acid, 1,3-phenylenediacetic acid, p-phenylenediacetic acid, and aromatic isomers of C36 dimers.

6. The waterborne ink, latex composition or rubber composition of claim 1, wherein the passivating agents represented by dimer or trimer fatty acids with >1 carboxylic acid groups have a basic structure (2): 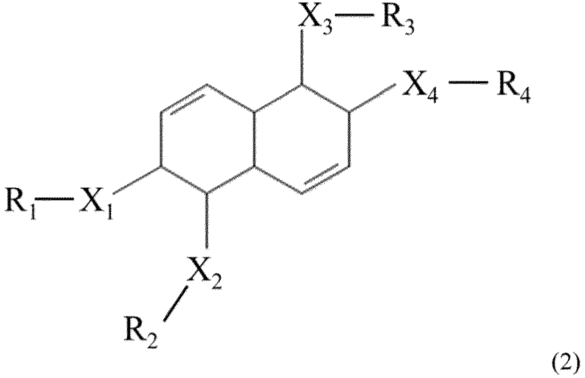 where X₁, X₂, X₃, and X₄ are independently an aliphatic chain of 0-20 sp3 or sp2 hybridized carbon atoms, and R₁, R₂, R₃, and R₄ are independently be an end group selected from H, COOH, COO-, OH, CH₃, tertiary butyl, isopropyl groups.

7. The waterborne ink, latex composition or rubber composition of claim 1, wherein the passivating agents represented by dimer or trimer fatty acids with >1 carboxylic acid groups have a basic structure (3): 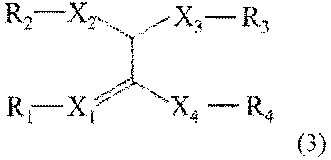 where X₁, X₂, X₃, and X₄ are independently an aliphatic chain of 0-20 sp³ or sp² hybridized carbon atoms, and R₁, R₂, R₃, and R₄ may independently be an end group from one of the following: H, COOH, COO-, OH, CH₃, tertiary butyl, isopropyl groups, optionally wherein at least two of the R groups are COOH or COO- groups.

8. The waterborne ink, latex composition or rubber composition of claim 7, wherein the passivating agents represented by dimer or trimer fatty acids with >1 carboxylic acid groups of the basic structure (3) include non-cyclic isomers of C36 dimers.

9. The waterborne ink, latex composition or rubber composition of claim 1, wherein the passivating agents are dimer or trimer fatty acids with >1 carboxylic acid groups and have a basic structure (4): 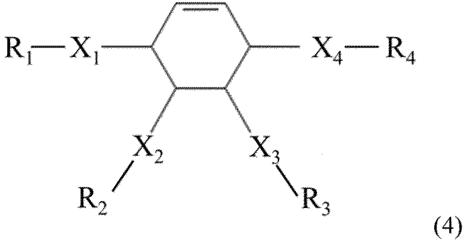 where X₁, X₂, X₃, and X₄ are independently an aliphatic chain of 0-20 sp³ or sp² hybridized carbon atoms, and R₁, R₂, R₃, and R₄ may independently be an end group from one of the following: H, COOH, COO-, OH, CH₃, tertiary butyl, isopropyl groups, preferably wherein the passivating agents represented by structure 4 are cis-4-Cyclohexene-1,2-dicarboxylic acid, 5 (or 6)-carboxy-4-hexylcyclohex-2-ene-1-octanoic acid, and cyclic isomers of C36 dimers.

10. The waterborne ink, latex composition or rubber composition of claim 1, wherein the passivating agent is selected from structures 1-4 and combinations thereof.

11. A metallic pigment preparation comprising a metallic pigment, and a passivating agent, wherein the passivating agent is a dimer or trimer fatty acid with >1 carboxylic acid groups selected from 5 (or 6)-carboxy-4-hexylcyclohex-2-ene-1-octanoic acid, 4-Cyclohexene-1,2-dicarboxylic acid, phthalic acid, terephthalic acid, isophthalic acid, 1,4-phenylenediacrylic acid, benzene-1,3,5-triacetic acid, 3-(4-carboxyphenyl)propionic acid, 1,4-phenylenedipropionic acid, 1,3-phenylenediacetic acid and p-phenylenediacetic acid.

12. The waterborne ink, latex composition or rubber composition of claim 1 or the metallic pigment preparation of claim 11, wherein the metallic pigment is present from 60-95% with respect to the total weight of the metallic pigment preparation, preferably wherein the metallic pigment is present from 77-95% with respect to the total weight of the metallic pigment preparation.

13. The waterborne ink, latex composition or rubber composition of claim 1 or the metallic pigment preparation of claim 11, wherein the metallic pigment is present from 85-99% of a metal and with 1-15% of a milling aid, with respect to the total weight of the metallic pigment preparation.

14. The waterborne ink, latex composition or rubber composition of claim 1 or the metallic pigment preparation of claim 11, wherein the metallic pigment used in the metallic pigment preparation is coated with one or more metal oxides selected from silicon oxide, titanium dioxide, zinc oxide, zirconium dioxide, tin oxide, cerium dioxide, vanadium (IV) oxide, manganese oxide, lead oxide, chromium oxide, iron oxide, aluminum oxide, tungsten oxide, and mixtures and alloys.

15. The waterborne ink, latex composition or rubber composition of claim 1 or the metallic pigment preparation of claim 11, wherein the metallic pigment preparation further comprises additives selected from neutralizing agents, pH adjusters, dispersing additives, anti-foam additives, de-foaming additives, and adhesion promoters, preferably wherein the pH adjusters are amines.

## Patentansprüche

1. Wässrige Tinte, Latexzusammensetzung oder Kautschukzusammensetzung, umfassend eine Metallpigmentzubereitung, die ein Metallpigment und ein Passivierungsmittel umfasst, wobei es sich bei dem Passivierungsmittel um eine Dimer- oder Trimerfettsäure mit >1 Carbonsäuregruppen handelt.

2. Wässrige Tinte, Latexzusammensetzung oder Kautschukzusammensetzung nach Anspruch 1, wobei das Passivierungsmittel in einer Menge im Bereich von 5 %-23 %, bezogen auf das Gesamtgewicht der Metallpigmentzubereitung, vorliegt.

3. Wässrige Tinte, Latexzusammensetzung oder Kautschukzusammensetzung nach Anspruch 1, wobei die Dimer- oder Trimerfettsäure durch Umsetzen von 2 oder mehr ungesättigten Fettsäuren zur Bildung einer Struktur, die aus einem Reaktionsprodukt der Ausgangsfettsäuren besteht, hergestellt wird, wobei es sich bei den ungesättigten Fettsäuren um ungesättigte C3-C20-Fettsäuren handelt, vorzugsweise wobei die ungesättigten Fettsäuren aus der Gruppe bestehend aus Acrylsäure, Methacrylsäure, Ölsäure, Elaidinsäure, Gonoidinsäure, Erucasäure, Palmitoleinsäure, Vaccensäure, Linolensäure, Linolelaidinsäure, γ-Linolensäure, α-Linolensäure, Stearidonsäure und Mischungen davon ausgewählt sind.

4. Wässrige Tinte, Latexzusammensetzung oder Kautschukzusammensetzung nach Anspruch 1, wobei die Passivierungsmittel, die durch Dimer- oder Trimerfettsäuren mit >1 Carbonsäuregruppen repräsentiert werden, die Grundstruktur von (1) aufweisen: 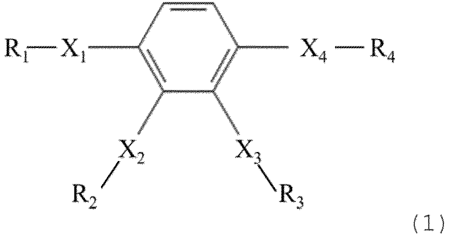 wobei X₁, X₂, X₃ und X₄ unabhängig für eine aliphatische Kette von 0-20 sp³- oder sp²-hybridisierten Kohlenstoffatomen stehen und R₁, R₂, R₃ und R₄ unabhängig für eine Endgruppe stehen, die aus H-, COOH-, COO⁻-, OH-, CH₃-, tert-Butyl- und Isopropylgruppen ausgewählt ist.

5. Wässrige Tinte, Latexzusammensetzung oder Kautschukzusammensetzung nach Anspruch 4, wobei das Passivierungsmittel aus der Gruppe bestehend aus Phthalsäure, Terephthalsäure, Isophthalsäure, 1,4-Phenylendiacrylsäure, Benzol-1,3,5-triessigsäure, 3-(4-Carboxyphenyl)propionsäure, 1,4-Phenylendipropionsäure, 1,3-Phenylendiessigsäure, p-Phenylendiessigsäure und aromatischen Isomeren von C36-Dimeren ausgewählt ist.

6. Wässrige Tinte, Latexzusammensetzung oder Kautschukzusammensetzung nach Anspruch 1, wobei die Passivierungsmittel, die durch Dimer- oder Trimerfettsäuren mit >1 Carbonsäuregruppen repräsentiert werden, die Grundstruktur (2) aufweisen: 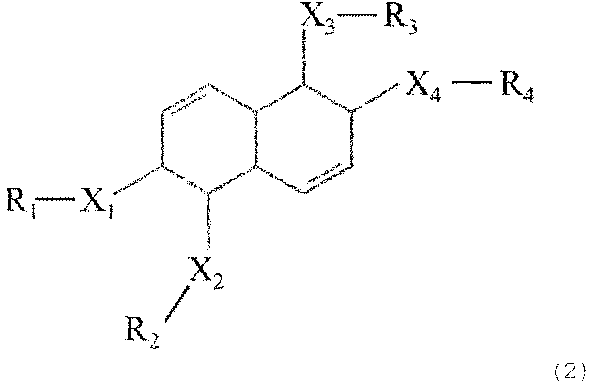 wobei X₁, X₂, X₃ und X₄ unabhängig für eine aliphatische Kette von 0-20 sp³- oder sp²-hybridisierten Kohlenstoffatomen stehen und R₁, R₂, R₃ und R₄ unabhängig für eine Endgruppe stehen, die aus H-, COOH-, COO-, OH-, CH₃-, tert-Butyl- und Isopropylgruppen ausgewählt ist.

7. Wässrige Tinte, Latexzusammensetzung oder Kautschukzusammensetzung nach Anspruch 1, wobei die Passivierungsmittel, die durch Dimer- oder Trimerfettsäuren mit >1 Carbonsäuregruppen repräsentiert werden, die Grundstruktur (3) aufweisen: 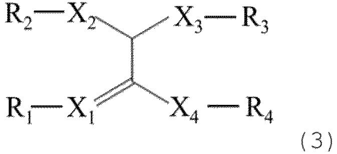 wobei X₁, X₂, X₃ und X₄ unabhängig für eine aliphatische Kette von 0-20 sp³- oder sp²-hybridisierten Kohlenstoffatomen stehen und R₁, R₂, R₃ und R₄ unabhängig für eine Endgruppe stehen können, die aus einer der Folgenden ausgewählt ist: H-, COOH-, COO-, OH-, CH₃-, tert-Butyl- und Isopropylgruppen, gegebenenfalls wobei mindestens zwei der R-Gruppen COOH- oder COO-Gruppen sind.

8. Wässrige Tinte, Latexzusammensetzung oder Kautschukzusammensetzung nach Anspruch 7, wobei die Passivierungsmittel, die durch Dimer- oder Trimerfettsäuren mit >1 Carbonsäuregruppen der Grundstruktur (3) repräsentiert werden, nichtcyclische Isomere von C36-Dimeren einschließen.

9. Wässrige Tinte, Latexzusammensetzung oder Kautschukzusammensetzung nach Anspruch 1, wobei die Passivierungsmittel Dimer- oder Trimerfettsäuren mit >1 Carbonsäuregruppen sind und die Grundstruktur (4) aufweisen: 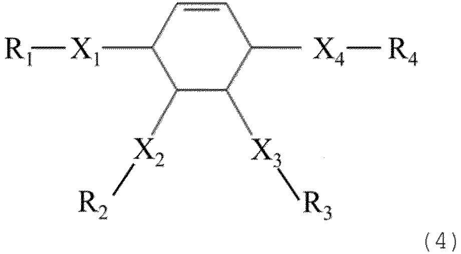 wobei X₁, X₂, X₃ und X₄ unabhängig für eine aliphatische Kette von 0-20 sp³- oder sp²-hybridisierten Kohlenstoffatomen stehen und R₁, R₂, R₃ und R₄ unabhängig für eine Endgruppe stehen können, die aus einer der Folgenden ausgewählt ist: H-, COOH-, COO-, OH-, CH₃-, tert-Butyl- und Isopropylgruppen, vorzugsweise wobei es sich bei den Passivierungsmitteln, die durch Struktur 4 repräsentiert werden, um cis-4-Cyclohexen-1,2-dicarbonsäure, 5(oder 6)-Carboxy-4-hexylcyclohex-2-en-1-octansäure und cyclische Isomere von C36-Dimeren handelt.

10. Wässrige Tinte, Latexzusammensetzung oder Kautschukzusammensetzung nach Anspruch 1, wobei das Passivierungsmittel aus Strukturen 1-4 und Kombinationen davon ausgewählt ist.

11. Metallpigmentzubereitung, umfassend ein Metallpigment und ein Passivierungsmittel, wobei es sich bei dem Passivierungsmittel um eine Dimer- oder Trimerfettsäure mit >1 Carbonsäuregruppen handelt, die aus 5(oder 6)-Carboxy-4-hexylcyclohex-2-en-1-octansäure, 4-Cyclohexen-1,2-dicarbonsäure, Phthalsäure, Terephthalsäure, Isophthalsäure, 1,4-Phenylendiacrylsäure, Benzol-1,3,5-triessigsäure, 3-(4-Carboxyphenyl)propionsäure, 1,4-Phenylendipropionsäure, 1,3-Phenylendiessigsäure und p-Phenylendiessigsäure ausgewählt ist.

12. Wässrige Tinte, Latexzusammensetzung oder Kautschukzusammensetzung nach Anspruch 1 oder Metallpigmentzubereitung nach Anspruch 11, wobei das Metallpigment in einer Menge von 60-95 %, bezogen auf das Gesamtgewicht der Metallpigmentzubereitung, vorliegt, wobei das Metallpigment vorzugsweise in einer Menge von 77-95 %, bezogen auf das Gesamtgewicht der Metallpigmentzubereitung, vorliegt.

13. Wässrige Tinte, Latexzusammensetzung oder Kautschukzusammensetzung nach Anspruch 1 oder Metallpigmentzubereitung nach Anspruch 11, wobei das Metallpigment in einer Menge von 85-99 % eines Metalls und mit 1-15 % einer Mahlhilfe, bezogen auf das Gesamtgewicht der Metallpigmentzubereitung, vorliegt.

14. Wässrige Tinte, Latexzusammensetzung oder Kautschukzusammensetzung nach Anspruch 1 oder Metallpigmentzubereitung nach Anspruch 11, wobei das in der Metallpigmentzubereitung verwendete Metallpigment mit einem oder mehreren Metalloxiden, die aus Siliciumoxid, Titandioxid, Zinkoxid, Zirconiumdioxid, Zinnoxid, Cerdioxid, Vanadium(IV)-oxid, Manganoxid, Bleioxid, Chromoxid, Eisenoxid, Aluminiumoxid, Wolframoxid und Mischungen und Legierungen ausgewählt sind, beschichtet ist.

15. Wässrige Tinte, Latexzusammensetzung oder Kautschukzusammensetzung nach Anspruch 1 oder Metallpigmentzubereitung nach Anspruch 11, wobei die Metallpigmentzubereitung ferner Additive umfasst, die aus Neutralisationsmitteln, Mitteln zur Einstellung des pH-Werts, Dispergieradditiven, Antischaumadditiven, Entschäumungsadditiven und Haftvermittlern ausgewählt sind, wobei es sich bei den Mitteln zur Einstellung des pH-Werts vorzugsweise um Amine handelt.

## Revendications

1. Encre, composition de latex ou composition de caoutchouc à base d'eau comprenant une préparation de pigment métallique comprenant un pigment métallique et un agent de passivation, l'agent de passivation étant un acide gras dimère ou trimère comportant > 1 groupe acide carboxylique.

2. Encre, composition de latex ou composition de caoutchouc à base d'eau selon la revendication 1, l'agent de passivation étant dans la plage de 5 à 23 % par rapport au poids total de la préparation de pigment métallique.

3. Encre, composition de latex ou composition de caoutchouc à base d'eau selon la revendication 1, l'acide gras dimère ou trimère étant produit par mise en réaction de 2 acides gras insaturés ou plus pour former une structure composée d'un produit de réaction des acides gras de départ, les acides gras insaturés étant des acides gras insaturés en C3-C20, préférablement les acides gras insaturés étant choisis dans le groupe constitué de l'acide acrylique, l'acide méthacrylique, l'acide oléique, l'acide élaïdique, l'acide gonoïdique, l'acide érucique, l'acide palmitoléique, l'acide vaccénique, l'acide linoléique, l'acide linolélaïdique, l'acide γ-linolénique, l'acide α-linolénique, l'acide stéaridonique et des mélanges correspondants.

4. Encre, composition de latex ou composition de caoutchouc à base d'eau selon la revendication 1, les agents de passivation représentés par des acides gras dimères ou trimères comportant > 1 groupe acide carboxylique ayant une structure basique de (1) : 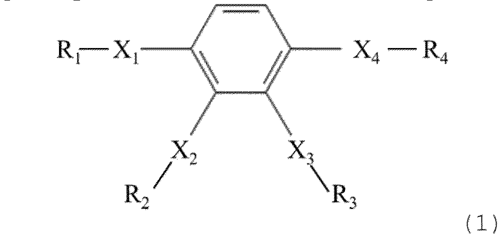 où X₁, X₂, X₃ et X₄ sont indépendamment une chaîne aliphatique de 0-20 atomes de carbone hybridés sp³ ou sp², et R₁, R₂, R₃ et R₄ sont indépendamment un groupe terminal choisi parmi des groupes H, COOH, COO⁻, OH, CH₃, butyle tertiaire, isopropyle.

5. Encre, composition de latex ou composition de caoutchouc à base d'eau selon la revendication 4, l'agent de passivation étant choisi dans le groupe constitué de l'acide phtalique, l'acide téréphtalique, l'acide isophtalique, l'acide 1,4-phénylènediacrylique, l'acide benzène-1,3,5-triacétique, l'acide 3-(4-carboxyphényl)propionique, l'acide 1,4-phénylènedipropionique, l'acide 1,3-phénylènediacétique, l'acide p-phénylènediacétique et des isomères aromatiques de dimères en C36.

6. Encre, composition de latex ou composition de caoutchouc à base d'eau selon la revendication 1, les agents de passivation représentés par des acides gras dimères ou trimères comportant > 1 groupe acide carboxylique ayant une structure basique de (2) : 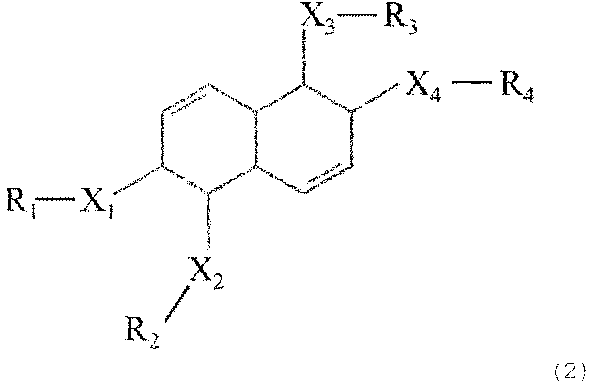 où X₁, X₂, X₃ et X₄ sont indépendamment une chaîne aliphatique de 0-20 atomes de carbone hybridés sp3 ou sp2, et R₁, R₂, R₃ et R₄ sont indépendamment un groupe terminal choisi parmi des groupes H, COOH, COO⁻, OH, CH₃, butyle tertiaire, isopropyle.

7. Encre, composition de latex ou composition de caoutchouc à base d'eau selon la revendication 1, les agents de passivation représentés par des acides gras dimères ou trimères comportant > 1 groupe acide carboxylique ayant une structure basique de (3) : 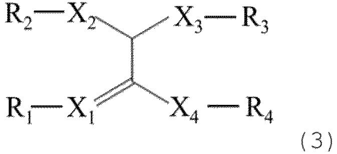 où X₁, X₂, X₃ et X₄ sont indépendamment une chaîne aliphatique de 0-20 atomes de carbone hybridés sp³ ou sp², et R₁, R₂, R₃ et R₄ pouvant indépendamment être un groupe terminal parmi l'un des suivants : des groupes H, COOH, COO⁻, OH, CH₃, butyle tertiaire, isopropyle, éventuellement au moins deux des groupes R étant des groupes COOH ou COO-.

8. Encre, composition de latex ou composition de caoutchouc à base d'eau selon la revendication 7, les agents de passivation représentés par des acides gras dimères ou trimères comportant > 1 groupe acide carboxylique de la structure basique (3) comprenant des isomères non cycliques de dimères en C36.

9. Encre, composition de latex ou composition de caoutchouc à base d'eau selon la revendication 1, les agents de passivation étant des acides gras dimères ou trimères comportant > 1 groupe acide carboxylique et ayant une structure basique de (4) : 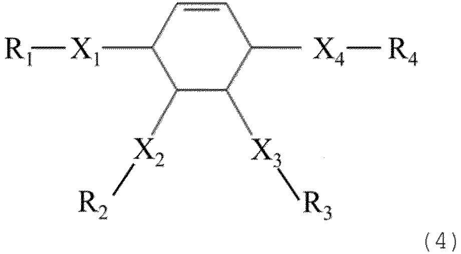 où X₁, X₂, X₃ et X₄ sont indépendamment une chaîne aliphatique de 0-20 atomes de carbone hybridés sp³ ou sp², et R₁, R₂, R₃ et R₄ pouvant indépendamment être un groupe terminal parmi l'un des suivants : des groupes H, COOH, COO⁻, OH, CH₃, butyle tertiaire, isopropyle, éventuellement les agents de passivation représentés par la structure 4 étant l'acide cis-4-cyclohexène-1,2-dicarboxylique, l'acide 5- (ou 6)-carboxy-4-hexylcyclohex-2-ène-1-octanoïque et des isomères cycliques de dimères en C36.

10. Encre, composition de latex ou composition de caoutchouc à base d'eau selon la revendication 1, l'agent de passivation étant choisi parmi les structures 1 à 4 et des combinaisons correspondantes.

11. Préparation de pigment métallique comprenant un pigment métallique et un agent de passivation, l'agent de passivation étant un acide gras dimère ou trimère comportant > 1 groupe acide carboxylique choisi parmi l'acide 5 (ou 6)-carboxy-4-hexylcyclohex-2-ène-1-octanoïque, l'acide 4-cyclohexène-1,2-dicarboxylique, l'acide phtalique, l'acide téréphtalique, l'acide isophtalique, l'acide 1,4-phénylènediacrylique, l'acide benzène-1,3,5-triacétique, l'acide 3-(4-carboxyphényl)propionique, l'acide 1,4-phénylènedipropionique, l'acide 1,3-phénylènediacétique et l'acide p-phénylènediacétique.

12. Encre, composition de latex ou composition de caoutchouc à base d'eau selon la revendication 1 ou préparation de pigment métallique selon la revendication 11, le pigment métallique étant présent de 60 à 95 % par rapport au poids total de la préparation de pigment métallique, préférablement le pigment métallique étant présent de 77 à 95 % par rapport au poids total de la préparation de pigment métallique.

13. Encre, composition de latex ou composition de caoutchouc à base d'eau selon la revendication 1 ou préparation de pigment métallique selon la revendication 11, le pigment métallique étant présent de 85 à 99 % d'un métal et comportant 1 à 15 % d'un auxiliaire de broyage, par rapport au poids total de la préparation de pigment métallique.

14. Encre, composition de latex ou composition de caoutchouc à base d'eau selon la revendication 1 ou préparation de pigment métallique selon la revendication 11, le pigment métallique utilisé dans la préparation de pigment métallique étant revêtu par un ou plusieurs oxydes métalliques choisis parmi l'oxyde de silicium, le dioxyde de titane, l'oxyde de zinc, le dioxyde de zirconium, l'oxyde d'étain, le dioxyde de cérium, l'oxyde de vanadium (IV), l'oxyde de manganèse, l'oxyde de plomb, l'oxyde de chrome, l'oxyde de fer, l'oxyde d'aluminium, l'oxyde de tungstène et des mélanges et des alliages.

15. Encre, composition de latex ou composition de caoutchouc à base d'eau selon la revendication 1 ou préparation de pigment métallique selon la revendication 11, la préparation de pigment métallique comprenant en outre des additifs choisis parmi des agents neutralisants, des agents d'ajustement du pH, des additifs dispersants, des additifs antimousses, des additifs de démoussage et des promoteurs d'adhérence, préférablement les agents d'ajustement du pH étant des amines.
